# DEMANDE DE BREVET EUROPEEN

(11) **EP 4 371 383 A1**
(43) Date de publication de la demande: **22.05.2024**
(21) Numéro de dépôt: 23209795.6
(22) Date de dépôt: 14.11.2023
(51) Int. Cl.: A01C 7/12, A01C 15/00, A01C 7/04

(54) **SEMOIR MÉCANIQUE ET BLOC DE DISTRIBUTION POUR SEMOIR MÉCANIQUE**

(30) Priorité: 16.11.2022 FR 2211893
(71) Demandeur: Sepeba Ebra, 49070 Beaucouze (FR)
(72) Inventeur: CHAUCHET, François, 49070 Beaucouzé (FR); DIDIER, Stéphane, 49190 Rochefort sur Loire (FR)
(74) Mandataire: Lequien, Philippe

(57) **Abrégé**

L'invention concerne un semoir (1) mécanique comprenant :
- un châssis (2) ;
- un bloc (32) de distribution monté sur le châssis (2) et présentant une paroi de fond inclinée par rapport au châssis (2), et un rebord périphérique s'étendant depuis la paroi de fond,
caractérisé en ce que le rebord périphérique présente au moins une portion qui s'étend sensiblement perpendiculairement à la paroi de fond de sorte à former, et en ce que la bordure périphérique intègre un volet mobile entre une position de fermeture du bloc (32) de distribution et une position d'ouverture du bloc (32) de distribution.

## Description

Le domaine de l'invention est celui de la conception et de la fabrication des outils agricoles.

Plus précisément, l'invention concerne un semoir mécanique ainsi qu'un bloc de distribution pour semoir mécanique.

Les semoirs mécaniques sont notamment utilisés par les agriculteurs pour la semaison de précision et, dans le cas de semoirs manuels, pour l'exploitation de petites ou moyennes surfaces cultivées.

Classiquement, les semoirs mécaniques comprennent :
- un châssis ;
- un bloc de distribution monté sur le châssis ;
- une trémie de stockage de graines à semer, débouchant dans le bloc de distribution, et
- des moyens d'entraînement des graines, logés dans bloc de distribution, et destinées à prélever les graines en nombre défini pour les décharger dans des sillons de terre.

Plus précisément, les moyens d'entraînement peuvent se présenter sous la forme d'un disque alvéolé. Par disque alvéolé, il est entendu un disque présentant des découpes pouvant prendre la forme de trous traversant le disque ou encore d'encoches s'ouvrant à la périphérie du disque.

Le bloc de distribution comprend une paroi de fond contre laquelle le disque alvéolé est disposé, et tourne autour d'un axe perpendiculaire à la paroi de fond.

La paroi de fond présente, en partie supérieure, c'est-à-dire dans une portion écartée du sol sur lequel la semaison est réalisée, une ouverture destinée à permettre le déchargement des graines dans les sillons de terre.

Le bloc de distribution présente également une bordure périphérique s'étendant depuis la paroi de fond, cette bordure périphérique étant inclinée par rapport à la paroi de fond d'un angle généralement compris entre 110° et 140°.

La bordure périphérique forme, avec la paroi de fond, une zone de préhension des graines par le disque.

L'inclinaison de la bordure périphérique par rapport à la paroi de fond permet une amenée limitée des graines à semer dans la zone de préhension, de sorte que les alvéoles du disque ne soient pas saturées (ou à tout le moins ne contiennent pas trop de graines). En d'autres termes, l'inclinaison de la bordure périphérique a pour but de l'imiter l'afflux de graines en direction du disque pour que chaque alvéole ne saisisse qu'un nombre défini de graines à la fois.

Cependant, cette inclinaison de la bordure périphérique limite la vitesse de semaison.

En effet, la vitesse de rotation du disque alvéolé est proportionnelle à la vitesse de déplacement. Dès lors, plus la vitesse de semaison est rapide et plus le disque alvéolé tourne vite, ce qui peut endommager les graines à semer et perturber la régularité de la distribution. En effet, à cause de sa vitesse de rotation, le disque peut perdre en régularité de remplissage de ses alvéoles, notamment pour la semaison de grosses graines. Il est donc nécessaire de limiter la vitesse d'avancement du semoir pour limiter la vitesse de rotation du disque et conserver une bonne qualité de semaison.

En outre, l'inclinaison de la bordure périphérique limite la taille du disque alvéolé qui peut être utilisé, réduisant, de fait, la possibilité de semer les graines en semis dense, c'est-à-dire en limitant l'espace entre les graines dans le sillon.

Cela s'explique par le fait que, pour semer en semis dense, il est nécessaire d'augmenter le nombre d'alvéoles afin de maximiser le nombre de graines déposées pour chaque rotation du disque assez lente pour préserver la régularité de semis des graines.

Les alvéoles du disque peuvent alors être disposées en quinconce, selon deux cercles concentriques, ce qui augmente la fréquence de dépose des graines et diminue l'espacement entre les graines dans le sillon, cela sans augmenter la vitesse de rotation du disque pour préserver l'intégrité des gaines à semer.

Toutefois, l'augmentation du nombre d'alvéoles est conditionnée par l'augmentation du diamètre du disque.

Par voie de conséquence, l'augmentation du diamètre du disque engendre l'augmentation de la taille du bloc de distribution, ce qui gêne le semis avec un inter-rang réduit, indispensable pour certaines cultures.

La manipulation du semoir est alors malaisée et donc fastidieuse pour l'agriculteur.

En d'autres termes, les semoirs mécaniques à distribution par disque, connus de l'art antérieur, limitent la semaison en rangs serrés, à vitesse rapide et de manière aisée pour l'agriculteur.

En outre, la bordure périphérique est pourvue d'une ouverture obturée par un bouchon pour permettre la vidange du semoir lorsque la semaison est terminée et qu'il reste des graines non semées.

L'agriculteur peut alors retirer le bouchon puis manipuler le semoir en le secouant pour en extraire les graines restantes par l'ouverture.

Toutefois, une telle vidange peut être longue et fatigante pour l'agriculteur, surtout après une semaison.

Par ailleurs, l'ouverture de la bordure périphérique peut former une zone de retenue des graines lors de la semaison, ce qui peut provoquer un phénomène de « fond de cuve », c'est-à-dire un risque de retenue de graines à semer, obligeant alors l'agriculteur à secouer le semoir pour déloger les graines de la zone de retenue, ou à recharger la trémie, ce qui augmente la fatigue de l'agriculteur, et génère, par ailleurs, un gaspillage de graines, qui demeurent dans le bloc car non prises par le disque.

Par ailleurs, la taille du disque, limitée par l'inclinaison de la bordure périphérique avec la paroi de fond, gène le semis de grosses graines ou de petits bulbilles à cadence rapide.

En effet, avec la vitesse de rotation élevée du disque lors de cadences rapides, les alvéoles ont du mal à se remplir de graines de grosses graines ou, au contraire, se remplissent de plusieurs graines à la fois, ce qui va à l'encontre de la régularité du semis.

L'invention a notamment pour objectif de pallier les inconvénients de l'art antérieur.

Plus précisément, l'invention a pour objectif de proposer un semoir mécanique permettant de limiter les phénomènes de fond de cuve et de faciliter la vidange en fin de semaison.

L'invention a également pour objectif de fournir un tel semoir mécanique qui permet une semaison en semis dense, à vitesse rapide et de manière aisée pour un agriculteur.

L'invention a en outre pour objectif de fournir un tel semoir qui permette de favoriser la précision du semis et la semaison de grosses graines.

Ces objectifs, ainsi que d'autres qui apparaîtront par la suite, sont atteints grâce à l'invention qui a pour objet un semoir mécanique comprenant :
- un châssis ;
- une trémie de stockage de graines à semer ;
- un bloc de distribution monté sur le châssis, le bloc de distribution présentant un passage d'admission de graines et un passage de sortie de graines, et
- des moyens d'entraînement de graines depuis le passage d'admission vers le passage de sortie, les moyens d'entraînement étant montés dans le bloc de distribution,

dans lequel le bloc de distribution présente une paroi de fond inclinée par rapport au châssis, et un rebord périphérique s'étendant depuis la paroi de fond jusqu'à un bord libre par lequel la trémie est raccordée au bloc de distribution,
caractérisé en ce que le rebord périphérique présente, au niveau du passage d'admission, au moins une portion qui s'étend sensiblement perpendiculairement à la paroi de fond de sorte à former, pour les moyens d'entraînement, une zone de préhension des graines en provenance de la trémie,
et en ce que la bordure périphérique intègre un volet situé dans la zone de préhension, le volet s'étendant depuis la paroi de fond, le volet étant mobile entre :
   - une position de fermeture du bloc de distribution, dans laquelle le volet forme une partie de la bordure périphérique, et
   - une position d'ouverture du bloc de distribution, dans laquelle le volet est déplacé de façon à créer une ouverture dans la paroi périphérique.

Le volet permet de faciliter la vidange du semoir lorsque la semaison est terminée et qu'il reste des graines dans la trémie.

En effet, l'agriculteur n'a qu'à positionner le volet dans sa position d'ouverture pour que les graines situées dans la zone de préhension puissent s'évacuer par l'ouverture.

L'évacuation des graines est également facilitée par l'inclinaison de la paroi de fond avec le châssis, qui dirige les graines vers la zone de préhension, mais également par le fait que l'ouverture s'étend depuis la paroi de fond, ce qui assure une évacuation des graines sans obstacle.

Ainsi, la vidange peut être réalisée de manière rapide et complète, simplement par l'effet de la gravité.

En d'autres termes, l'agriculteur n'a pas à manipuler le semoir pour diriger les graines vers l'ouverture dans la bordure périphérique.

Un tel semoir mécanique permet également de limiter les phénomènes de fond de cuve, puisque le volet forme une partie de la bordure périphérique.

Autrement dit, à l'inverse de l'art antérieur dans lequel le bouchon peut former une zone de retenue, le volet du bloc de distribution forme une portion de la bordure périphérique et donc dirige les graines vers la zone de préhension.

En outre, grâce à la perpendicularité de la au moins une portion du rebord périphérique avec la paroi de fond, il est possible d'agrandir le diamètre du disque qui comprend alors plus d'alvéoles.

Dès lors, il est possible de semer plus de graines à chaque tour de disque.

En conséquence, il est possible d'augmenter la vitesse de semaison tout en conservant une bonne régularité de semaison.

Enfin, la perpendicularité de la au moins une portion de la bordure périphérique avec la paroi de fond du bloc permet d'augmenter la taille de la zone de sortie.

Combiné à l'augmentation de la taille du disque, et donc à l'augmentation de la taille des alvéoles, l'augmentation de la taille de la zone de sortie permet la semaison de graines plus grosses.

Selon un aspect avantageux, le volet s'étend depuis la paroi de fond jusqu'au bord libre du rebord périphérique.

L'extension du volet depuis la paroi de fond jusqu'au rebord périphérique permet l'évacuation des graines directement depuis la trémie, sans risque d'obturation de l'ouverture par une affluence trop importante de graines à évacuer.

Selon un autre aspect avantageux, la au moins une portion du rebord périphérique forme un angle compris entre 80° et 95° avec la paroi de fond.

Une telle gamme d'angle permet de limiter les phénomènes de fond de cuve en dirigeant les graines vers la paroi de fond, et donc vers la zone de préhension.

De plus, une telle gamme d'angle permet de maximiser la taille des moyens d'entraînement, qui se présentent alors sous la forme d'un disque alvéolé, sans augmenter les dimensions du bloc, ce qui bénéficie à la facilité de manipulation du semoir mécanique, et à la vitesse de semis en rapport avec une densité souhaitée.

En variante, le volet peut être monté à pivotement par rapport au rebord périphérique ou à la paroi de fond, par le biais d'une charnière.

L'utilisation d'une charnière évite que le volet soit perdu lors de la vidange du semoir mécanique.

Selon un autre aspect avantageux, les moyens d'entraînement se présentent sous la forme d'un disque alvéolé monté à rotation selon un axe perpendiculaire à la paroi de fond, et le bloc de distribution comprend des moyens d'éjection de graines surnuméraires depuis les moyens d'entraînement, les moyens d'éjection étant situés entre le passage d'admission et le passage de sortie.

Les moyens d'éjection permettent de réaliser une semaison selon un nombre de graines souhaité par alvéole, par exemple une semaison du type graine par graine lorsqu'une seule graine est souhaitée par alvéole.

Plus particulièrement, les moyens d'éjection permettent, lorsque plusieurs graines sont logées dans une alvéole, d'éjecter les graines surnuméraires pour ne conserver qu'un nombre souhaité de graines par alvéole.

Selon un autre aspect avantageux, les moyens d'éjection prennent la forme d'un décroché pratiqué dans la bordure périphérique, le décroché s'ouvrant à l'opposé des moyens d'entraînement.

Le décroché permet d'éjecter les graines par effet centrifuge.

En effet, lors de la rotation du disque alvéolé, si des graines en excès sont contenues dans une même alvéole, alors la force centrifuge tend à éjecter les graines surnuméraires hors de l'alvéole. La présence du décroché permet alors de recevoir les graines éjectées par la force centrifuge pour les renvoyer vers la zone de préhension.

L'invention concerne également un bloc de distribution pour semoir mécanique tel que précédemment décrit, le bloc de distribution présentant :
- un passage d'admission de graines ;
- un passage de sortie de graines, et
- une paroi de fond, et
- un rebord périphérique s'étendant depuis la paroi de fond jusqu'à un bord libre,

caractérisé en ce que le rebord périphérique présente, au niveau du passage d'admission, au moins une portion qui s'étend sensiblement perpendiculairement à la paroi de fond de sorte à former une zone de préhension de graines à semer,
et en ce que la bordure périphérique intègre un volet situé dans la zone de préhension, le volet s'étendant depuis la paroi de fond, et étant mobile entre :
   - une position de fermeture du bloc de distribution, dans laquelle le volet forme une partie de la bordure périphérique, et
   - une position d'ouverture du bloc de distribution, dans laquelle le volet est déplacé de façon à créer une ouverture dans la paroi périphérique.

D'autres caractéristiques et avantages de l'invention apparaîtront plus clairement à la lecture de la description suivante d'au moins un mode de réalisation préférentiel de l'invention, donné à titre d'exemple illustratif et non limitatif, et des dessins annexés parmi lesquels :
- la figure 1 est une représentation schématique en perspective de dessus d'un semoir mécanique selon l'invention ;
- la figure 2 est une représentation schématique en coupe longitudinale de moyens de dépose du semoir mécanique selon l'invention, les moyens de dépose comprenant notamment un bloc de distribution surmonté d'une trémie ;
- la figure 3 est une représentation schématique en perspective du dessus d'un premier mode de réalisation du bloc de distribution des moyens de dépose du semoir mécanique selon l'invention, dans lequel est monté à rotation un disque alvéolé permettant la préhension des graines à semer, le bloc de distribution comprenant un rebord périphérique intégrant un volet, le volet étant dans une position de fermeture du bloc de distribution ;
- la figure 4 est une représentation schématique en perspective de dessus d'un deuxième mode de réalisation du bloc de distribution du semoir mécanique selon l'invention, dans lequel le volet est dans une position d'ouverture du bloc de distribution permettant une vidange du bloc de distribution ;
- la figure 5 est une représentation schématique en perspective du dessus d'une variante du premier mode de réalisation du bloc de distribution des moyens de dépose du semoir mécanique selon l'invention.

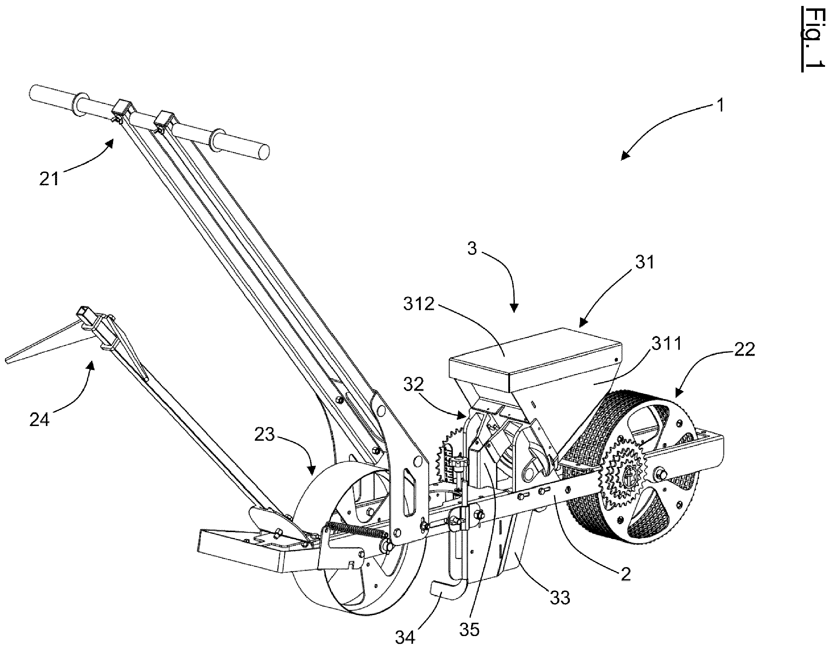

La figure 1 illustre un semoir 1 mécanique selon l'invention.

Le semoir 1 mécanique comprend :
- un châssis 2 ;
- des moyens de dépose 3 solidaires du châssis 2.

Tel qu'illustré par la figure 1, le châssis 2 comprend un guidon 21 permettant la manipulation du semoir 1 mécanique, et une paire de roues permettant le déplacement du semoir 1 mécanique.

Plus précisément, le semoir 1 mécanique comprend une roue d'entraînement 22 et une roue suiveuse 23 montées à rotation sur le châssis 2.

La roue d'entraînement 22 est une roue couplée aux moyens de dépose 3 permettant d'activer la semaison de graines lorsqu'elle est entraînée en rotation. Cette roue est notamment entraînée en rotation lorsque le semoir 1 mécanique est déplacé.

La roue suiveuse 23 est, quant à elle, une roue libre destinée uniquement à assurer le déplacement du semoir 1 mécanique et le tassement des graines déposées dans les sillons de terre. Sur certains modèles dépourvus de roue suiveuse 23, c'est la roue d'entraînement 22 qui peut assurer le tassement des graines déposées dans les sillons de terre.

La coopération entre la roue d'entraînement 22 et les moyens de dépose 3 se fait par exemple par l'intermédiaire d'une chaîne ou d'une courroie couplée en rotation à la roue d'entraînement 22 d'une part, et aux moyens de dépose 3 d'autre part.

Des moyens de sélection de vitesse peuvent également être prévus sur le semoir 1 mécanique pour permettre d'adapter la fréquence de dépose de graines en fonction de la vitesse de déplacement du semoir 1 mécanique, c'est-à-dire en fonction de la vitesse de rotation de la roue d'entraînement 22.

Le châssis 2 comprend également un guide 24 destiné à être positionné sur la droite ou sur la gauche du semoir 1 mécanique en utilisation, cela afin de permettre de suivre une trajectoire prédéterminée.

Tel que cela est illustré sur la figure 1, les moyens de dépose 3 comprennent :
- une trémie 31 de stockage de graines à semer ;
- un bloc 32 de distribution monté sur le châssis 2 ;
- un écarteur 33 destiné à créer un sillon dans la terre dans laquelle les graines sont semées, et
- une lame 34 destinée à refermer les sillons de terre lorsque les graines y sont déposées.

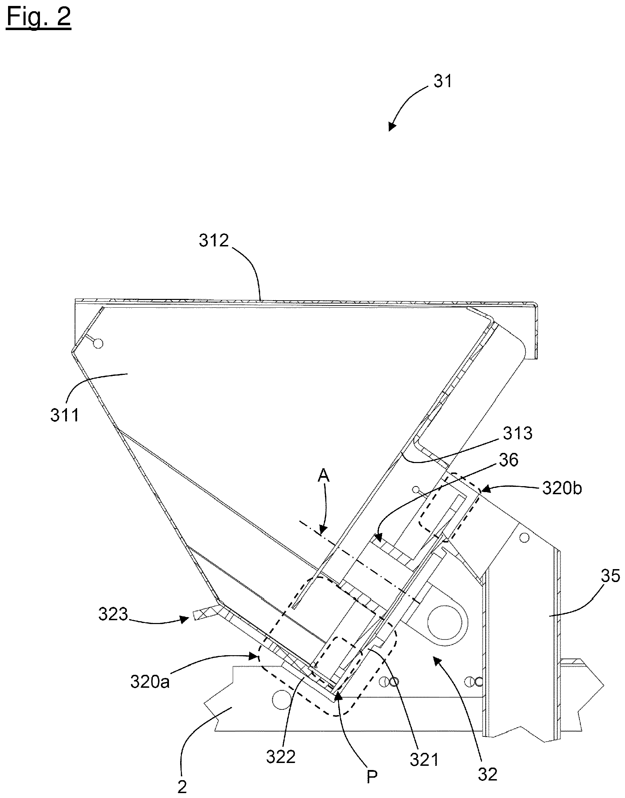

Comme illustré par la figure 2, la trémie 31 est montée en recouvrement du bloc 32 de distribution.

La trémie 31 comprend une cuve 311 fermée par un couvercle 312 et une plaque 313 logée à l'intérieur de la cuve 311.

Avantageusement, la plaque 313 peut être réglée en position dans la trémie 31 afin de régler le débit de graines sortant de la trémie 31 en fonction de la taille des graines à semer et/ou de la vitesse d'avancement du semoir 1 mécanique. Autrement dit, le réglage en position de la plaque 313 permet de modifier la quantité de graines sortant de la trémie 31.

En référence aux figures 2, 3 et 4, le bloc 32 de distribution présente un passage d'admission 320a, dans lequel les graines entrent dans le bloc 32 de distribution depuis la trémie 31, et un passage de sortie 320b depuis lequel les graines quittent le bloc 32 de distribution.

Le bloc 32 de distribution présente une paroi de fond 321 et un rebord périphérique 322 s'étendant depuis la paroi de fond 321 jusqu'à un bord libre 3221.

La paroi de fond 321 est inclinée par rapport au châssis 2 du semoir 1 mécanique. En d'autres termes, la paroi de fond 321 est destinée à être inclinée par rapport au sol dans lequel les graines sont semées.

Cela permet le positionnement du passage de sortie 320b au-dessus du passage d'admission 320a par rapport au sol dans lequel les graines sont semées, et oblige les graines à être positionnées dans une zone de préhension P située dans le passage d'admission 320a, pour être entraînées par des moyens d'entraînement décrits ultérieurement.

La trémie 31 est raccordée au bloc 32 de distribution au niveau du bord libre 3221 du bloc 32 de distribution.

Le rebord périphérique 322 présente au moins une portion qui s'étend sensiblement perpendiculairement à la paroi de fond 321.

Tel que cela est illustré par la figure 2, le rebord périphérique 322 s'étend intégralement sensiblement perpendiculairement à la paroi de fond 321.

Plus particulièrement, le rebord périphérique 322 forme un angle compris entre 80° et 95° avec la paroi de fond 321. De préférence, l'angle peut être compris entre 85°et 90°.

Dans le passage d'admission 320a, le bloc 32 de distribution définit, au niveau de la jonction entre le rebord périphérique 322 et la paroi de fond 321 la zone de préhension P des graines par des moyens d'entraînement.

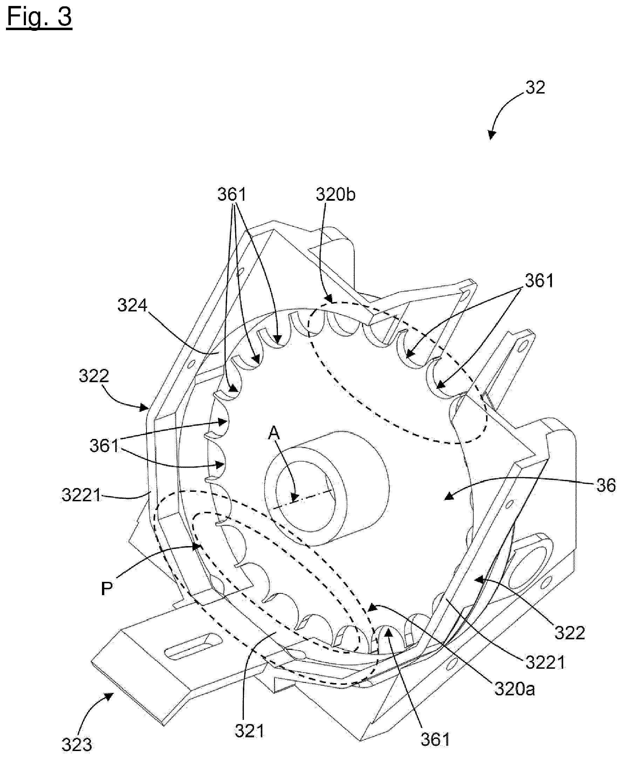

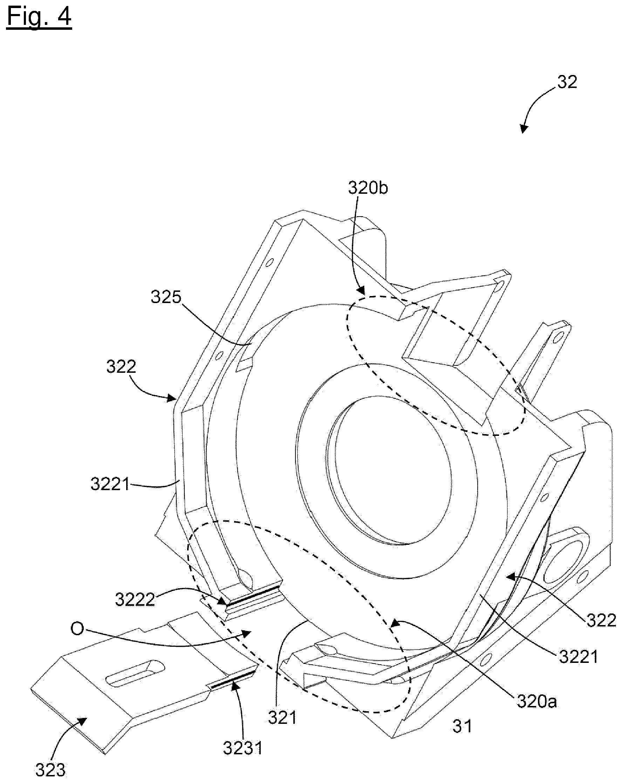

Tel que cela est particulièrement visible sur les figures 3 et 4, la bordure périphérique 322 intègre un volet 323 situé dans la zone de préhension P.

Le volet 323 s'étend depuis la paroi de fond 321.

Le volet 323 est mobile entre :
- une position de fermeture du bloc 32 de distribution dans laquelle le volet forme une partie de la bordure périphérique 322, et
- une position d'ouverture du bloc 32 de distribution, dans laquelle le volet 323 est déplacé de façon à créer une ouverture O dans la paroi périphérique 322.

L'ouverture O permet une vidange aisée du semoir 1 mécanique en fin de semaison, comme expliqué ultérieurement.

En effet, en positionnant le volet dans sa position d'ouverture, par l'effet de la gravité, les graines contenues dans la trémie 31 se retrouvent dirigées dans la zone de préhension P et se déversent hors du semoir 1 mécanique via l'ouverture O formée dans le rebord périphérique 322.

Tel que cela est illustré sur les figures 3 et 4, le volet 323 s'étend depuis la paroi de fond 321 jusqu'au bord libre 3221 du rebord périphérique 322.

Tel que cela est visible sur la figure 3, pour faciliter sa manipulation, le volet 323 s'étend depuis la paroi de fond 321 du bloc 32 de distribution jusqu'au-delà du bord libre 3221 du rebord périphérique 322.

Ainsi, une partie du volet 323 peut être attrapée par l'agriculteur pour la manipulation du volet.

Selon une forme de réalisation particulière, et en référence à la figure 4, le rebord périphérique 322 présente au moins une rainure 3222 s'étendant depuis la paroi de fond 321 jusqu'au bord libre 3221. De préférence, le rebord périphérique 322 présente deux rainures 3222.

Le volet 323 présente quant à lui au moins une languette 3231 destinée à être logée dans l'une des rainures 3222, lorsque le volet 323 est dans sa position de fermeture du bloc 32 de distribution.

Plus particulièrement, le volet 323 présente deux languettes 3231, chaque languette 3231 étant destinée à être logée dans une rainure 3222 du rebord périphérique 322, dans la position de fermeture du bloc 32 de distribution.

Selon une variante non illustrée sur les figures, le volet 323 peut être monté à pivotement par rapport à la paroi de fond 321, cela par le biais d'une charnière.

Le bloc 32 de distribution est avantageusement réalisé en matériaux métallique, par exemple en acier ou dans un alliage d'aluminium favorisant la légèreté du semoir 1 mécanique en vue d'améliorer sa maniabilité lors de la semaison. En variante, une conception en plastique, ou dans un autre matériau, pourrait également offrir les mêmes avantages.

Tel que cela est illustré par les figures 2 et 3, le semoir 1 mécanique comprend également des moyens d'entraînement des graines depuis la trémie 31 vers une cheminée 35 de dépose des graines dans les sillons de terre.

La cheminée 35 est portée par le bloc 32 et reçoit les graines provenant du passage de sortie 320b du bloc 32 de distribution.

Autrement dit, les moyens d'entraînement permettent d'entraîner les graines depuis le passage d'admission de graines vers le passage de sortie.

Tel que cela est illustré par la figure 3, les moyens d'entraînement se présentent sous la forme d'un disque 36 alvéolé.

Le disque 36 alvéolé est monté à rotation selon un axe A perpendiculaire à la paroi de fond 321 (illustré par la figure 3).

Les alvéoles permettent une préhension graine par graine dans la zone de préhension P, et un déchargement des graines dans la cheminée 35.

Tel qu'illustré par la figure 3, le disque 36 alvéolé présente une pluralité d'alvéoles 361 s'ouvrant à la périphérie du disque 36 alvéolé, ces alvéoles 361 coopérant avec le rebord périphérique 322 du bloc pour former des cavités dans lesquelles les graines sont reçues pour être entraînées du passage d'admission 320a vers le passage de sortie 320b du bloc 32 de distribution. Plus précisément, les alvéoles 361 coopèrent avec la au moins une portion du rebord périphérique 322, qui s'étend perpendiculairement au fond 321, pour former les cavités dans lesquelles les graines sont reçues.

En d'autres termes, les alvéoles 361 permettent d'entraîner les graines à semer en dehors du bloc 32 de distribution, c'est-à-dire à destination de la cheminée 35 qui permet leur dépôt dans les sillons de terre.

Le bloc de distribution 32 comprend également des moyens d'éjection de graines surnuméraires depuis les moyens d'entraînement.

Les moyens d'éjection sont situés entre le passage d'admission 320a et le passage de sortie 320b.

Tel que cela est illustré par la figure 3, les moyens d'éjection prennent la forme, selon un premier mode de réalisation, d'un décroché 324 pratiqué dans la bordure périphérique 322, le décroché 324 s'ouvrant à l'opposé des moyens d'entraînement.

Selon un deuxième mode de réalisation illustré par la figure 4, les moyens d'éjection prennent la forme d'une fente 325 pratiquée dans la bordure périphérique 322, la fente 325 s'étendant en périphérie des moyens d'entraînement.

En fonctionnement, les moyens d'éjection agissent de la manière suivante.

Lorsqu'un nombre surnuméraire de graines se trouve dans une alvéole 361, la ou les graines surnuméraires sont alors logées de manière précaire dans l'alvéole 361. La force centrifuge due à la rotation du disque 36 alvéolé provoque ainsi un déplacement de la ou des graines surnuméraires en direction du rebord périphérique 322 du bloc 32 de distribution.

Ainsi, lorsque la ou les graines surnuméraires se trouvent en regard des moyens d'éjection, elles sont éjectées du disque 36 alvéolé en direction du décroché 324 ou de la fente 325, et sont redirigées vers la zone de préhension.

Cela permet donc d'améliorer la semaison des graines en nombre souhaité, c'est-à-dire en conservant une régularité dans la semaison.

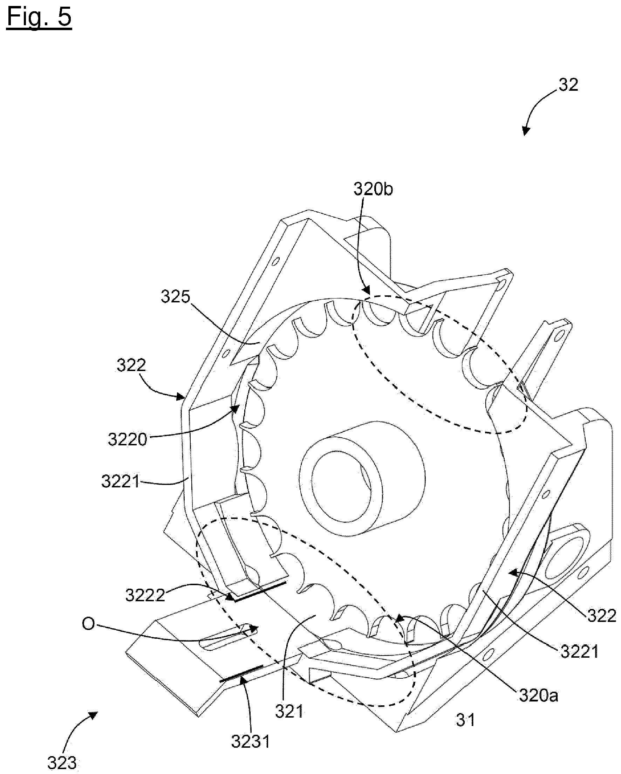

Selon une variante de réalisation, illustrée par la figure 5, seule une portion du rebord périphérique 322 s'étend perpendiculairement au fond 321. Plus précisément, une partie du rebord périphérique 322 peut présenter un pan incliné 3220 à sa jonction avec le fond 321.

Le pan incliné 3220 permet notamment de limiter les risques de bouchage d'une cavité formée par la coopération d'une alvéole 361 avec le rebord périphérique 322.

Autrement dit, l'extension perpendiculaire d'une portion seulement du rebord périphérique 322 avec le fond 321 permet de limiter les risques de bouchage du disque 36 alvéolé, notamment lorsque les graines semées sont de petite taille.

En revanche, pour des graines de grosse taille, la présence du pan incliné 3220 n'a que peu d'effets.

A titre indicatif, le pan incliné s'étend sur une longueur inférieure ou égale à 10 mm, longueur mesurée sur un plan définit par le fond 321.

Le semoir 1 mécanique qui vient d'être décrit permet, grâce à l'extension sensiblement perpendiculaire d'une portion au moins du rebord périphérique 322 par rapport à la paroi de fond 321, d'augmenter la taille du disque 36 alvéolé d'entraîner un nombre important de graines à chaque rotation du disque 36 alvéolé sans augmenter la taille du semoir 1 mécanique, notamment son encombrement latéral. Le débit de semaison peut ainsi être augmenté, ce qui permet d'augmenter la vitesse de semaison en préservant l'intégrité des graines.

La limitation de l'encombrement bénéficie à la facilité de manoeuvre du semoir 1 mécanique et permet une semaison en rangs serrés.

En outre, la présence du volet 323 permet de réaliser une vidange de la trémie 31 de manière simple, rapide et complète puisque l'agriculteur n'a qu'à positionner le volet 323 dans sa position d'ouverture, la vidange se faisant alors par l'effet de la gravité uniquement.

En d'autres termes, l'agriculteur n'a pas à manipuler (par exemple à secouer) le semoir 1 mécanique pour assurer sa vidange, ou à balayer manuellement les graines non vidangées en direction du trou de vidange.

La facilité de vidange est en outre accrue par l'angle formé entre la paroi de fond 321 et le rebord périphérique 322, cet angle permettant de diriger les graines vers la zone de préhension dans laquelle est située le volet 323.

## Revendications

1. Semoir (1) mécanique comprenant :
- un châssis (2) ;
- une trémie (31) de stockage de graines à semer ;
- un bloc (32) de distribution monté sur le châssis (2), le bloc (32) de distribution présentant un passage d'admission (320a) de graines et un passage de sortie (320b) de graines, et
- des moyens d'entraînement de graines depuis le passage d'admission (320a) vers le passage de sortie (320b), les moyens d'entraînement étant montés dans le bloc (32) de distribution,
dans lequel le bloc (32) de distribution présente une paroi de fond (321) inclinée par rapport au châssis (2), et un rebord périphérique (322) s'étendant depuis la paroi de fond (321) jusqu'à un bord libre (3221) par lequel la trémie (31) est raccordée au bloc (32) de distribution,
**caractérisé en ce que** le rebord périphérique (322) présente, au niveau du passage d'admission (320a), au moins une portion qui s'étend sensiblement perpendiculairement à la paroi de fond (321) de sorte à former, pour les moyens d'entraînement, une zone de préhension (P) des graines en provenance de la trémie (31),
et **en ce que** la bordure périphérique (322) intègre un volet (323) situé dans la zone de préhension (P), le volet (323) s'étendant depuis la paroi de fond (321), le volet (323) étant mobile entre :
- une position de fermeture du bloc (32) de distribution, dans laquelle le volet (232) forme une partie de la bordure périphérique (322), et
- une position d'ouverture du bloc (32) de distribution, dans laquelle le volet (323) est déplacé de façon à créer une ouverture (O) dans la paroi périphérique (322),
et **en ce que** les moyens d'entraînement se présentent sous la forme d'un disque (36) alvéolé monté à rotation selon un axe (A) perpendiculaire à la paroi de fond (321).

2. Semoir (1) mécanique selon la revendication 1, **caractérisé en ce que** le volet (323) s'étend depuis la paroi de fond (321) jusqu'au bord libre (3221) du rebord périphérique (322).

3. Semoir (1) mécanique selon l'une quelconque des revendications précédentes, **caractérisé en ce que** la au moins une portion du rebord périphérique (322) forme un angle compris entre 80° et 95° avec la paroi de fond (321).

4. Semoir (1) mécanique selon la revendication 1, **caractérisé en ce que** le volet (323) est monté à pivotement par rapport au rebord périphérique (322) ou à la paroi de fond (321), par le biais d'une charnière.

5. Semoir (1) mécanique selon l'une quelconque des revendications précédentes, **caractérisé en ce que** le bloc (32) de distribution comprend des moyens d'éjection de graines surnuméraires depuis les moyens d'entraînement, les moyens d'éjection étant situés entre le passage d'admission (320a) et le passage de sortie (320b).

6. Semoir (1) mécanique selon la revendication précédente, **caractérisé en ce que** les moyens d'éjection prennent la forme d'un décroché (324) pratiqué dans la bordure périphérique (322), le décroché (324) s'ouvrant à l'opposé des moyens d'entraînement.

7. Bloc (32) de distribution pour semoir (1) mécanique selon l'une quelconque des revendications précédentes, le bloc (32) de distribution présentant :
- un passage d'admission (320a) de graines ;
- un passage de sortie (320b) de graines, et
- une paroi de fond (321), et
- un rebord périphérique (322) s'étendant depuis la paroi de fond (321) jusqu'à un bord libre (3221),
**caractérisé en ce que** le rebord périphérique (322) présente, au niveau du passage d'admission (320a), au moins une portion qui s'étend sensiblement perpendiculairement à la paroi de fond (321) de sorte à former une zone de préhension (P) de graines à semer,
et **en ce que** la bordure périphérique (322) intègre un volet (323) situé dans la zone de préhension (P), le volet (323) s'étendant depuis la paroi de fond (321), et étant mobile entre :
- une position de fermeture du bloc (32) de distribution, dans laquelle le volet (323) forme une partie de la bordure périphérique (322), et
- une position d'ouverture du bloc (32) de distribution, dans laquelle le volet (323) est déplacé de façon à créer une ouverture (O) dans la paroi périphérique (322).

## Revendications modifiées

### Revendications modifiées conformément à la règle 137(2) CBE.

1. Dispositif de manoeuvre (2) d'écrans de protection (3) pour serre (1), s'étendant entre une première extrémité (21) et une deuxième extrémité (22), le dispositif de manoeuvre (2) comprenant :
- une pluralité d'écrans de protection (3) mobiles entre une position de protection et une position de rangement ;
- des moyens moteurs (4), positionnés entre la première extrémité (21) et la deuxième extrémité (22), les moyens moteurs (4) comprenant au moins une roue d'entraînement (42) mobile à rotation autour d'un axe de rotation (A), et
- des moyens de transmission (5) solidaires des écrans de protection (3), **caractérisé en ce que** les moyens de transmission (5) comprennent :
- une première boucle d'entraînement (51) d'une première partie des écrans de protection (3), s'étendant entre la roue d'entraînement (42) et une première poulie (6) positionnée à la première extrémité (21) du dispositif de manoeuvre (2),
- une deuxième boucle d'entraînement (52) d'une seconde partie des écrans de protection (3), s'étendant entre la roue d'entraînement (42) et une deuxième poulie (7) positionnée à la deuxième extrémité (22) du dispositif de manoeuvre (2),
dans lequel la première boucle d'entraînement (51) et la deuxième boucle d'entraînement (52) s'étendent dans le prolongement l'une de l'autre en étant parallèles, de part et d'autre de la roue d'entraînement (42),
et **en ce que** chaque écran de protection (3) présente une extrémité frontale (31) par laquelle il est relié à la première boucle (51) ou la deuxième boucle (52) via une bielle (8) de liaison.

2. Dispositif de manoeuvre (2) selon la revendication 1, **caractérisé en ce que** les moyens moteurs (4) sont positionnés à égale distance de la première extrémité (21) et de la deuxième extrémité (22).

3. Dispositif de manoeuvre (2) selon l'une quelconque des revendications précédentes, **caractérisé en ce que** la ou chaque roue d'entraînement (42) des moyens moteurs (4) est une roue dentée, et **en ce que** la première boucle d'entraînement (51) et la deuxième boucle d'entraînement (52) comprennent chacune une portion de chaîne (53) destinée à coopérer avec une roue d'entraînement (42).

4. Dispositif de manoeuvre (2) selon la revendication précédente, **caractérisé en ce que** la première boucle d'entraînement (51) et la deuxième boucle d'entraînement (52) comprennent chacune un câble métallique (54) joignant chacune des extrémités de la portion de chaîne (53).

5. Dispositif de manoeuvre (2) selon l'une quelconque des revendications précédentes, **caractérisé en ce que** la ou chaque roue d'entraînement (42) des moyens moteurs (4) comprend un premier disque (42a) et un deuxième disque (42b), la première boucle d'entraînement (51) coopérant avec le premier disque (42a) et la deuxième boucle d'entraînement (52) coopérant avec le deuxième disque (42b).

6. Serre (1) comprenant une structure intégrant deux arches principales (11) espacées l'une de l'autre et un élément de couverture (13) recouvrant la structure, **caractérisée en ce que** la serre (1) comprend également un dispositif de manoeuvre (2) selon l'une quelconque des revendications précédentes, la première poulie (6) et la deuxième poulie (7) étant chacune solidaire de l'une des arches principales (11).

7. Serre (1) selon la revendication précédente, **caractérisée** en ce la structure comprend au moins une arche intermédiaire (12) intercalée entre les deux arches principales (11), et en ce que chaque écran de protection (3) présente une extrémité fixe (32) solidaire de l'une des arches intermédiaires (12) ou d'une arche principale (11).

8. Serre (1) selon l'une des revendications 6 et 7, **caractérisée en ce que** dans sa position de rangement, chaque écran de protection (3) est replié en accordéon.
